(19) Europäisches Patentamt
European Patent Office
Office européen des brevets

(11) **EP 3 865 417 A1**

(12) **EUROPÄISCHE PATENTANMELDUNG**

(43) Veröffentlichungstag:
**18.08.2021 Patentblatt 2021/33**

(21) Anmeldenummer: **20157241.9**

(22) Anmeldetag: **13.02.2020**

(51) Int Cl.:
**B65D 25/10** (2006.01)   **B65D 51/26** (2006.01)
**B65D 81/05** (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Schoeller Allibert GmbH**
**19057 Schwerin (DE)**

(72) Erfinder: **KELLERER, Richard**
**85622 Feldkirchen (DE)**

(74) Vertreter: **Winter, Brandl - Partnerschaft mbB**
**Alois-Steinecker-Straße 22**
**85354 Freising (DE)**

Bemerkungen:
•Die Bezugnahmen auf die Abbildung 1B, 7-11 gelten als gestrichen (R. 43 EPÜ 1973).
•Ein Antrag gemäss Regel 139 EPÜ auf Berichtigung der Beschreibung liegt vor. Über diesen Antrag wird im Laufe des Verfahrens vor der Prüfungsabteilung eine Entscheidung getroffen (Richtlinien für die Prüfung im EPA, A-V, 3.).

(54) **BEHÄLTERSYSTEM MIT FLEXIBLEM FÜLLMATERIAL**

(57)     Offenbart ist ein Behältersystem (2) zum Transportieren von Stückware (16) mit einem Behälter (3); einem Deckel (4) zum Verschließen des Behälters (3); und zumindest einem in den Behälterinnenraum vorspringenden elastischen Element (10) zur Lagefixierung der Stückware (16) innerhalb des Behälterinnenraums. Erfindungsgemäß ist das zumindest eine elastische Element (10) separat ausgebildet und so geformt, dass sich mehrere elastische Elemente (10) übereinander stapeln oder ineinander nesten lassen.

Fig. 1

EP 3 865 417 A1

**Beschreibung**

Technisches Gebiet

Die vorliegende Erfindung bezieht sich auf ein Behältersystem gemäß dem Oberbegriff des Anspruchs 1 sowie einem elastischen Positionierungselement zur Verwendung in einem erfindungsgemäßen Behältersystem.

Stand der Technik

Im Versandhandel werden Stückwaren, welche sich in der Regel jeweils in einer Primärverpackung befinden, zum Transport einzeln oder konfektioniert in Sekundärverpackungen gepackt. Bei der Sekundärverpackung handelt es sich meist um Versandkartons. Da die Sekundärverpackung meist deutlich größer als die Primärverpackung ist, wird das Restvolumen innerhalb der Sekundärverpackung mit Luftkissen, Kunststoffschnipsel oder anderem Füllmaterial aufgefüllt, damit die Stückware beim Transport nicht innerhalb der Sekundärverpackung verrutschen oder gar umherfliegen kann und dabei beschädigt wird. Durch den stetig zunehmenden Versandhandel nimmt auch der durch das Verpackungsmaterial verursachte Müll zu.

Aus ökologischen Gründen wird daher über den Einsatz von Mehrwegbehältern beim Versandhandel nachgedacht. Es sind diverse Mehrwegbehälter und Systeme zur Lagefixierung von in dem Behälterinnenraum befindlicher Stückware bekannt.

Beispielsweise gibt es Systeme, bei denen nach der Platzierung der Ware im Behälter diese über einen oder mehrere aufblasbare Airbags gesichert wird (siehe WO 94/024091 A2 oder DE 298 01 569 U1). Der Nachteil solcher Airbagsysteme liegt nicht nur im höheren Aufwand bei der Herstellung, sondern sie sind auch aufwändiger in der Handhabung, da beim Verpacken der Ware eine (Druck-)Luftquelle benötigt wird.

Aus CH 670 072 A5 ist eine Verpackung bekannt, bei der die Ware durch ein eingelegtes elastisches Element fixiert wird. Aus EP 0 727 367 B1 sind elastische Bögen bekannt, welche an einander gegenüberliegenden Seitenwänden oder -ecken vorgesehen sind und so zwischen sich einen Gegenstand aufnehmen und im Behälterinnenraum zentrieren können. Jedoch sind diese Systeme nicht in der Lage, die Ware in alle Richtungen zu sichern.

Aufgabe der vorliegenden Erfindung ist es deshalb, ein umweltfreundliches Behältersystem bereitzustellen, das auf einfache und sichere Weise Stückware im Behälter festlegen kann.

Diese Aufgabe wird durch einen Behälter mit den Merkmalen des Anspruchs 1 gelöst. Vorteilhafte Weiterbildungen sind Gegenstand von Unteransprüchen.

Das erfindungsgemäße Behältersystem dient zum Transport von Stückware, wie sie üblicherweise im (Online-)Versandhandel zu privaten und/oder gewerblichen Endkunden versandt wird. Bei der Stückware kann es sich um einzelne oder mehrere, auch verschiedene, Gegenstände einzeln oder im Gebinde, ihrerseits verpackt oder unverpackt, handeln. Um zu verhindern, dass sich die Ware innerhalb des Behälters während des Transports ungewollt bewegt, verrutscht oder umherfliegt, also zur Lagefixierung der Stückware innerhalb des Behälterinnenraums, ist zumindest ein in den Behälterinnenraum vorspringendes (dünnwandiges) elastisches (Positionierungs-)Element vorgesehen. Dieses elastische Element drückt mit einer dem Material immanenten elastischen Federkraft auf die Stückware und klemmt diese zwischen dem elastischen Element und einer gegenüberliegenden Behälterwandung ein. Diese Klemmkraft verhindert durch Kraft- bzw. Reibschluss die Bewegungsfreiheit der Stückware. Dieses elastische Element dient als flexibles Füllmaterial bzw. zur Warensicherung. Erfindungsgemäß weist das Behältersystem einen (nestbaren oder stapelbaren Behälter und (neben einem Boden und einer Seitenwandung) einen losen oder angelenkten Deckel auf, mittels welchem der Behälter verschließbar ist. Das zumindest eine elastische Element ist vorzugsweise separat zum Behälter und zum Deckel ausgebildet und so geformt, dass sich mehrere elastische Elemente übereinander stapeln oder ineinander nesten lassen.

Auf diese Weise können mehrere elastische Elemente getrennt vom Behälter und Deckel platzsparend gelagert oder nach Auslieferung der Ware in oder außerhalb des Behälters platzsparend rückgeführt werden. Im Gegensatz zu bekannten Luftkissen, Kunststoffschnipsels, etc. ermöglicht die Stapelbarkeit bzw. Nestbarkeit der elastischen Elemente eine Aufbewahrung in einer definierten und zueinander festgelegten Weise, so dass diese eine Einheit bilden und nicht lose herum liegen oder beim Transport herumfliegen. Diese können beispielsweise in genesteter oder gestapelter Form in einem Regal oder auf anderen Lagerflächen gelagert werden. Beim Verpacken des Behälters können je nach Bedarf ein oder mehrere elastische Elemente vom Stapel genommen werden und in den Behälter gelegt werden.

Die separate Ausbildung des elastischen Elements zum Behälter und Deckel hat diverse Vorteile. Zum einen kann für das elastische Element, unabhängig vom Material des Behälters, ein beliebiges Material gewählt werden. Ferner wird dadurch ermöglicht, dass situationsabhängig z.B. je nach verbleibenden Restvolumen im Behälter unterschiedliche elastische Elemente, zum Beispiel mehr oder weniger weit vorspringende bzw. hohe elastische Elemente, eingesetzt werden können. Ferner erlaubt die Modularität das Austauschen eines oder mehreren elastischen Elementen (z.B. aufgrund von Verschleiß oder Defekt) oder die Wieder- oder Weiterverwendung des elastischen Elements in einem anderen Behälter (z.B. bei Defekt des Behälters). Darüber hinaus erleichtert die Entfernbarkeit des elastischen Elements das getrennte Recycling von Behälter und elastischem Element. Durch die Lösbarkeit ist es auch möglich, Behälter und/oder Deckel einerseits und elastische Elemente andererseits getrennt zu lagern oder getrennt zurückzuführen. Belässt man bei der Rückführung von nestbaren Behältern die elastischen Elemente innerhalb des Behälters, verringert sich die Nesttiefe und dementsprechend erhöht sich der Platzbedarf des Behälterstapels.

Vorzugweise ist das zumindest eine elastische Element an einer Innenseite des Deckels, vorzugsweise an zentraler Stelle, oder einer Innenseite des Behälters werkzeuglos und lösbar so befestigbar, dass es in den Behälterinnenraum vorspringt. Handelt es sich um ein einzelnes elastisches Element so ist dieses vorzugsweise mittig oder an zentraler Stelle an der Deckelinnenseite vorgesehen. Handelt es sich um mehrere elastische Elemente so sind diese vorzugsweise gleichmäßig und symmetrisch zum Mittelpunkt der Deckelinnenseite angeordnet. Das (zumindest eine) elastische Element ist dergestalt, dass es im unbelasteten Zustand, d.h. wenn keine Kraft von außen, d.h. von einer Ware, auf das elastische Element drückt, zumindest in zwei Ebenen, vorzugsweise in zumindest zwei zueinander senkrechten Ebenen, gekrümmt ist und mit dem Deckel einen geschlossenen (keinen hermetisch geschlossenen) Hohlraum ausbildet. Das elastische Element ist daher dünnwandig ausgebildet.

Erfindungsgemäß übt das an der Deckelinnenseite des Deckels befindliche elastische Element eine elastische Drückkraft (primär von oben) auf die im Behälter befindliche Ware aus. Die Tatsache, dass sich das elastische Element an der Deckelinnenseite befindet (und der Behälter weder am Boden noch an der Seitenwandung bzw. an den Seitenwänden solche oder andere elastische Elemente aufweist), bringt mehrere Vorteile mit sich. Zum einen kann der Behälter ungehindert von irgendwelchen Lagefixierungselementen mit der Ware bestückt werden. Zum anderen wird mit einem Handgriff, nämlich dem Aufsetzen und Verschließen des Behälters mit dem Deckel gleichzeitig die Ware im Behälter fixiert. Ferner können bestehende Behälter mit einem erfindungsgemäßen Deckel nachgerüstet werden, ohne den Behälter selbst verändern zu müssen.

Die Tatsache, dass das elastische Element mit dem Deckel einen geschlossenen Hohlraum ausbildet, impliziert, dass das elastische Element ein (dünnwandiges) Hohlprofil ausbildet. Der Vorteil einer solchen Hohlprofilgeometrie liegt darin, dass, wenn auf das elastische Element lokal (durch eine Ware) eine Druckkraft ausgeübt wird, dieses nicht zur Seite ausweicht, sondern von der umlaufenden Wandung des Hohlprofils die Druck- bzw. Zugkräfte aufgenommen werden, wodurch das elastische Element in Position gehalten wird und sich nur lokal verformt.

Dadurch, dass sich das elastische Element an der Deckelinnenseite befindet und zumindest in zwei Ebenen, vorzugsweise in zumindest zwei zueinander senkrechten Ebenen, gekrümmt ist, übt das elastische Element in einer ersten Ebene bedingt durch die (erste) Krümmung eine Kraft mit einer Kraftkomponente von oben bzw. in vertikaler Richtung bzw. in der z-Achse des Behälters und einer Kraftkomponente in einer ersten Behälterquerrichtung auf die Ware aus und in einer zweiten Ebene bedingt durch die (zweite) Krümmung eine Kraft mit einer Kraftkomponente von oben und einer Kraftkomponente in eine zweite Querrichtung auf die Ware aus. D.h. die Ware im Behälter erfährt nicht nur eine Kraft von oben bzw. in z-Achsen-Richtung, sondern auch (anteilig) in einer x-Achsen-Richtung und einer y-Achsen-Richtung des Behälters. Dadurch wird die Ware nicht nur gegen den Boden, sondern auch gegen eine oder mehrere Seitenwände des Behälters gedrückt und in ihrer Bewegungsfreiheit in alle Richtungen eingeschränkt.

Das elastische Element kann doppelt gekrümmt sein oder eine sphärische Oberfläche aufweisen. Vorzugsweise kann das elastische Element die Form eines Halbsphäroids oder eines Kugelsegments aufweisen oder kuppel- oder halbkugelförmig ausgebildet sein. Wenn eine elastische sphärische Oberfläche gegen einen Gegenstand drückt und sich diesem elastisch anschmiegt, wird der Gegenstand in allen drei Achsrichtungen festgelegt.

An der Innenseite des Deckels können eine oder mehrere Halterungen vorgesehen sein, an welchen das zumindest eine elastische Element, vorzugsweise werkzeuglos, lösbar befestigt werden kann. Dadurch kann für das elastische Element, unabhängig vom Material des Behälters, eine beliebiges Material gewählt werden. Ferner wird dadurch ermöglicht, dass situationsabhängig z.B. je nach verbleibenden Restvolumen im Behälter unterschiedliche elastische Elemente, zum mehr oder weniger vorspringende elastische Elemente, eingesetzt werden können. Ferner erlaubt die Modularität das Austauschen eines oder mehreren elastischen Elementen (z.B. aufgrund von Verschleiß oder Defekt) oder die Wieder- oder Weiterverwendung des elastischen Elements in einem anderen Behälter (z.B. bei Defekt des Behälters). Schließlich erleichtert die Entfernbarkeit des elastischen Elements das getrennte Recycling von Behälter und elastischem Element.

Zur flächigen Anlage und Befestigung an der Innenseite des Deckels kann das elastische Element auf der dem Deckel zugewandten Seite einen umlaufenden, ebenen Kragen oder Befestigungsflansch aufweisen. Dadurch lässt sich das elastische Element leichter an den oben genannten Halterungen an der Deckelinnenseite befestigen.

Form und/oder Abmessungen des Befestigungsflansches können dabei an die Größe und/oder Geometrie der Innenseite des Deckels angepasst sein. Da Behälter meist eine quadratische oder rechteckförmige Grundfläche aufweisen, kann der Befestigungsflansch entsprechend quadratische oder rechteckförmige Außenabmessungen haben, der den sphärischen oder halbkugelförmig gebildeten Abschnitt umgibt.

Im Bereich des Scheitelpunkts kann das elastische Element abgeflacht oder krümmungsfrei sein. Da das elastische Element am Scheitelpunkt am weitesten vom Deckel vorspringt, wird das elastische Element an dieser Stelle von der Ware am stärksten eingedrückt. Entsprechend hoch sind an dieser Stelle die elastischen Federkräfte auf die Ware. Um diese Kräfte nicht allzu hoch werden zu lassen und eine Beschädigung der Ware, z. B. durch Eindrücken der Primärverpackung, ist es vorteilhaft, das elastische Element im Bereich des Scheitelpunkts etwas abzuflachen oder begrenzt krümmungsfrei bzw. eben zu gestalten, um die elastische Federkräfte zu reduzieren.

Der Übergang zwischen dem doppelt gekrümmten bzw. sphärischen Abschnitt des elastischen Elements einerseits und dem Befestigungsflansch und/oder dem abgeflachten Scheitelpunkt andererseits ist vorzugsweise sprungfrei, knickfrei und krümmungsruckfrei. Dadurch wird erreicht, dass sich das elastische Element insgesamt, insbesondere im sphärischen Bereich, elastisch verformt und nicht an Übergängen nachgibt oder einknickt, wenn durch die Ware Druck auf das elastische Element ausgeübt wird.

Um nicht nur eine Mehrfachverwendung des Behälters und des elastischen Elements, sondern auch eine Wiederverwendung der Grundmaterialen zu ermöglichen, kann der Behälter und/oder das elastische Element aus recyclebarem Kunststoff hergestellt sein.

Das verwendete elastische Material kann eines der folgenden Materialien sein: Polymere, Elastomere (insbesondere EPDM), thermoplastische Elastomere oder Kombinationen aus den vorgenannten Materialien.

Material, Geometrie und/oder Wandstärke des elastischen Elements sollten so gewählt sein, dass sich das elastische Element nach Verformung durch eine äußere Kraft eine eigenständige Rückstellung in seine ursprüngliche (unbelastete) Form ermöglicht.

Erfindungsgemäß bilden das dünnwandige elastische Element und die Deckelinnenseite einen geschlossenen Hohlraum. Um eine elastische Verformung des elastischen Elements sicherzustellen, kann das elastische Element zur Entlüftung des Hohlraums bei der Verformung eine oder mehrere Entlüftungsöffnungen oder -schlitze aufweisen. Das elastische Element kann auch eine oder eine einzige zentrale Öffnung aufweisen. Die Größe der Öffnungen bzw. Schlitze sollte kleiner als die Stückware gewählt sein, um sicherzustellen, dass die Stückware nicht durch die (zentrale) Öffnung(en) in das Innere des elastischen Elements gelangt.

Der Deckel ist dazu ausgebildet, auf die Seitenwände aufgesetzt zu werden, um den Klappbehälter zu schließen. Um zu verhindern, dass sich der Deckel aufgrund der Druckkraft des elastischen Elements gegen die Ware im Behälter nicht vom Behälter löst, kann der Deckel und/oder der Behälter Verschluss- oder Verriegelungselemente zum Festlegen oder Verriegeln des Deckels am Behälter aufweisen.

Das Verschlusselement kann zumindest teilweise in einem Abschnitt eines Randes des Deckels vorgesehen sein, um den Deckel zu verschließen, wenn dieser auf die aufgerichteten Seitenwände aufgesetzt ist. Im Verhältnis zum Deckel ist das Verschlusselement beweglich. Insbesondere ist das Verschlusselement in Form eines Verschlussriegels separat vom Deckel ausgebildet und beweglich mit dem Deckel verbunden.

An einem oberen Rand der Seitenwände kann zumindest ein Verschlusselementgegenstück derart vorgesehen sein, dass das zumindest eine Verschlusselementgegenstück mit dem Verschlusselement am Deckel formschlüssig zusammenwirken kann.

Der Grad, um welchen das elastische Element von der Deckelseite vorspringt, hängt vom Füllgrad bzw. Füllhöhe des Behälters ab. Dieser Grad bzw. der Abstand von der Deckelinnenseite bis zum Scheitelpunkt des elastischen Elements kann vorzugsweise so gewählt werden, dass dieser größer ist als der Abstand zu der am weitesten von der Deckelinnenseite entfernte bzw. niedrigsten Ware. Dadurch wird sichergestellt, dass das elastische Element in jedem Falle die Ware mit der geringsten Höhe kontaktiert und elastisch gegen den Boden bzw. die Seitenwände drückt.

Die Aufgabe der vorliegenden Erfindung wird auch durch ein elastisches Element mit den Merkmalen des nebengeordneten Anspruchs gelöst. Diese eignet sich zur Verwendung in einem Behälter nach einem der vorhergehenden Aspekte. Das erfindungsgemäße elastische Element ist konfiguriert, um an einer Innenseite des Deckels, vorzugsweise an zentraler Stelle, oder einer Innenseite des Behälters derart platzierbar oder befestigt zu werden, dass es in den Behälterinnenraum vorspringt. Das elastische Element ist so geformt, dass sich mehrere elastische Elemente übereinander stapeln oder ineinander nesten lassen. Vorzugsweise weist es die Form eines Halbsphäroids auf, insbesondere ist es halbkugelförmig. Ferner kann es zumindest in zwei Ebenen, vorzugsweise in zumindest zwei zueinander senkrechten Ebenen, gekrümmt sein und mit dem Deckel einen geschlossenen Hohlraum aus, wenn es an der Innenseite des Deckels anliegt oder befestigt ist.

Kurzbeschreibung der Zeichnungen

Die vorliegende Erfindung wird im Folgenden anhand bevorzugter Ausführungsbeispiele unter Bezugnahme auf die beigefügten Zeichnungen näher beschrieben. Es zeigen:

Fig. 1A eine perspektivische Ansicht eines Behälters gemäß einer ersten Ausführungsform der Erfindung mit Seitenwänden in einer aufgerichteten Stellung;

Fig. 1B eine perspektivische Ansicht des Behälters gemäß der ersten Ausführungsform der Erfindung mit Seitenwänden in einer aufgerichteten Stellung ohne Deckel;

Fig. 2 eine erste Schnittansicht des in Fig. 1A gezeigten Behälters;

Fig. 3 eine zweite Schnittansicht des in Fig. 1A gezeigten Behälters;

Fig. 4 eine perspektivische Ansicht des Behälters gemäß der ersten Ausführungsform der Erfindung mit Seitenwänden in einer eingeklappten Stellung;

Fig. 5 eine Schnittansicht des in Fig. 4 gezeigten Behälters;

Fig. 6 ist eine isolierte Ansicht eines Behälterdeckels mit einem volumenänderbaren Element in einer ersten Stellung geringen Volumens;

Fig. 7 ist eine isolierte Ansicht eines Behälterdeckels mit einem volumenänderbaren Element in einer zweiten, ausgefahrenen Stellung mit vergrößertem Volumen;

Fig. 8 ist eine perspektivische Ansicht eines Behälters gemäß einer zweiten Ausführungsform der Erfindung;

Fig. 9 ist eine Schnittansicht durch den Behälter der Fig. 8 in einem unbefüllten Zustand;

Fig. 10 ist eine Schnittansicht durch den Behälter der Fig. 8 in einem befüllten Zustand; und

Fig. 11 ist eine isolierte Unteransicht des Behälterdeckels gemäß der zweiten Ausführungsform.

Gleiche oder funktional äquivalente Merkmale sind in den einzelnen Figuren mit denselben Bezugzeichen versehen.

Detaillierte Beschreibung bevorzugter Ausführungsformen

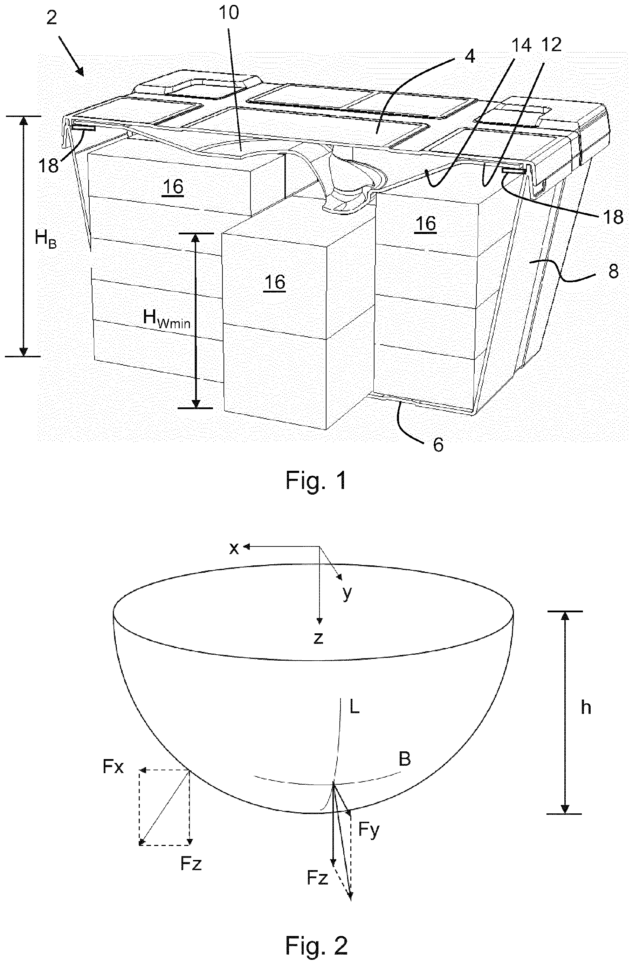

Fig. 1 zeigt einen Behälter 2, der mit einem Deckel 4 verschließbar ist. Der Behälter 2 und der Deckel 4 sind vorzugsweise aus Kunststoff gefertigt. Der Behälter hat einen im Wesentlichen rechteckigen Querschnitt, einen Boden 6 und vier Seitenwände 8, welche vom Boden aus sich konisch nach außen aufweiten, um so mehrere gleiche oder kompatible Behälter im Leerzustand platzsparend ineinander nesten zu können. Der obere Rand des Behälters 2 ist schräg nach unten geführt, um für einen ebenfalls schräg nach unten geführten Rand des Deckels eine flächige Auflage zu bilden und den Behälter dicht abzuschließen.

Innerhalb des Behälters oder an einer Innenseite des Deckels 4 ist ein elastisches Element 10 vorgesehen. Das elastische Element 10 ist insgesamt dünnwandig ausgeführt, weist einen umlaufenden Randabschnitt 12 auf, an dem das elastische Element 10 an der Innenseite des Deckels 4 anliegt oder befestigt ist, und einen dazu zentral vorgesehen und von der Innenseite des Deckels vorspringenden Abschnitt 14, der in das Behälterinnere vorragt, wenn der Deckel 4 auf den Behälter 2 gesetzt wird. Befindet sich bei Aufsetzen des Deckels 4, wie in Fig. 1 gezeigt, eine oder mehrere Waren 16 im Behälter 2, kontaktiert der vorspringende Abschnitt 14 die Ware(n) 16 und aufgrund der elastischen Materialeigenschaften des elastischen Elements 10 durch die Ware 16 elastisch verformt. Da der vorspringenden Abschnitt 14 ebenfalls aufgrund seiner elastischen sich in seine ursprüngliche Form zurückstellen will, wird die Ware durch diese elastische Rückstellkraft oder Federkraft gegen den Boden 6 bzw. die Seitenwände 8 gedrückt und dadurch die Lage des Ware 16 innerhalb des Behälters 2 fixiert.

Der Randabschnitt 12 des elastischen Elements 10 wird an der Innenseite des Deckels befestigt. Dies kann auf unterschiedliche Weise erfolgen. Beispielsweise können an der Deckelinnenseite Halterungen 18 für den Randabschnitt 12 vorgesehen sein. So kann beispielsweise die Elastizität des Materials dazu genutzt werden, um den Randabschnitt 12 vor dem Einführen in die Halterungen, z.B. radial, zu verformen. Dies ermöglicht ein werkzeugloses Befestigen und Entfernen des elastischen Elements. Alternativ kann der Randabschnitt 12 auch an die Innenseite des Deckels 4 geklebt oder mit dieser verschweißt werden.

Der Vorsprungabschnitt 14 des elastischen Elements 10 hat eine doppelt gekrümmte bzw. eine sphärische Schalenform oder Hohlprofilform. In der bevorzugten Ausführungsform ist der Vorsprungabschnitt 14 halbkugelschalenförmig. Wenn die Länge des Behälters 2 deutlich größer dessen Breite ist, kann der Vorsprungabschnitt 14 auch ellipsoidförmig ausgebildet sein oder mehrere halbkugelschalenförmig Vorsprungabschnitte 14 in einer oder mehreren Reihen vorgesehen sein.

In Fig. 1 sind die Waren 16 vereinfacht quaderförmig dargestellt, diese können jedoch jede beliebige Form aufweisen, da sich das elastische Material des elastischen Elements 10 an die Form der Ware 16 anschmiegt, ohne diese einzudrücken oder anderweitig zu beschädigen.

Der wesentliche Vorteil einer doppeltgekrümmten oder sphärischen Oberfläche wird anhand der Fig. 2 erläutert. Das elastische Element 10 bzw. der Vorsprungsabschnitt 14 ist nicht nur in einer x-z-Ebene gekrümmt, sondern auch in einer y-z-Ebene. Vor diesem Hintergrund ist das (ein und dasselbe) elastische Element 10 in der Lage, elastische Federkräfte F in x-Richtung, in y-Richtung und in z-Richtung auf die Ware 16 im Behälter 2 auszuüben und somit die Bewegungsfreiheit der Ware in alle Richtungen einzuschränken.

Der Vorteil einer geschlossenen Schalenform bzw. eines Hohlprofils liegt darin, dass es bei einer lokal eingebrachten Kraft nicht zur Seite ausweicht, sondern durch ein elastisches Kräftegleichgewicht entlang des "Breitenkreise" B und entlang des "Längenkreises" L (siehe angedeutete Kreislinien in Fig. 2) in Position gehalten und lediglich lokal eingeformt wird.

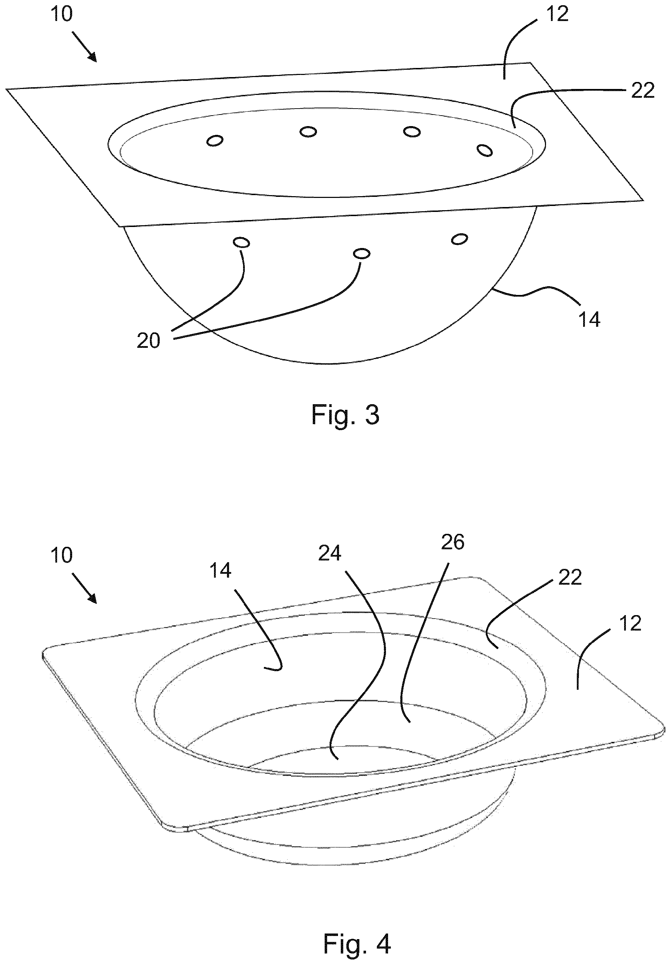

Fig. 3 zeigt das elastische Element 10 alleine. Der Randabschnitt 12, mit welchem das elastische Element 10 an der Innenseite des Deckels befestigt wird, ist eben und der Deckeninnenseite entsprechend rechteckig ausgebildet und umgibt den in das Behälterinnere vorspringenden Abschnitt 14. Das elastische Element 10, genauer gesagt der vorspringenden Abschnitt 14 bildet mit der Innenseite des Deckels 4 einen Hohlraum aus. Damit sich der vorspringende Abschnitt 14 ungehindert elastisch verformen kann, sind im vorspringenden Abschnitt 14 ein oder mehrere Entlüftungslöcher 20 vorgesehen. Die Entlüftungslöcher 20 sind vorgesehen, dass bei elastischer Verformung des elastischen Elements die in dem Hohlraum zwischen elastischen Element 10 und der Deckelinnenseite befindliche Luft durch die Entlüftungsöffnungen nach Außen entweichen kann und so der vorspringende Abschnitt 14 durch die Ware 16 leichter eindrückt bzw. komprimiert werden kann.

Der Übergang 22 zwischen dem vorspringenden bzw. gekrümmten Abschnitt 14 und dem Randabschnitt bzw. Befestigungsflansch 12 ist sprungfrei, knickfrei und krümmungsruckfrei, so dass bei Druckkräfte auf den vorspringenden Abschnitt 14 das elastische Element 10 nicht am Übergang 22 einknickt, sondern die Kräfte über den Randabschnitt 12 in den Deckel 4 einleitet und sich der vorspringende Abschnitt 14 nur lokal elastisch verformt.

Fig. 4 zeigt eine Abwandlung des elastischen Elements 10, bei welchem der vorspringenden bzw. gekrümmten Abschnitt 14 am bzw. im Bereich des Scheitelpunkts einen abgeflachten Abschnitt 24 aufweist, der im unbelasteten Zustand parallel zum Randabschnitt ist. Der Übergang 26 zwischen dem vorspringenden bzw. gekrümmten Abschnitt 14 und dem abgeflachten Abschnitt 24 ist sprungfrei, knickfrei und krümmungsruckfrei, so dass bei Druckkräfte auf den abgeflachten Abschnitt 24 das elastische Element 10 nicht am Übergang 26 einknickt, sondern die Kräfte über den Randabschnitt 12 in den Deckel 4 einleitet und sich der abgeflachte Abschnitt 24 und der vorspringende Abschnitt 14 nur lokal elastisch verformen.

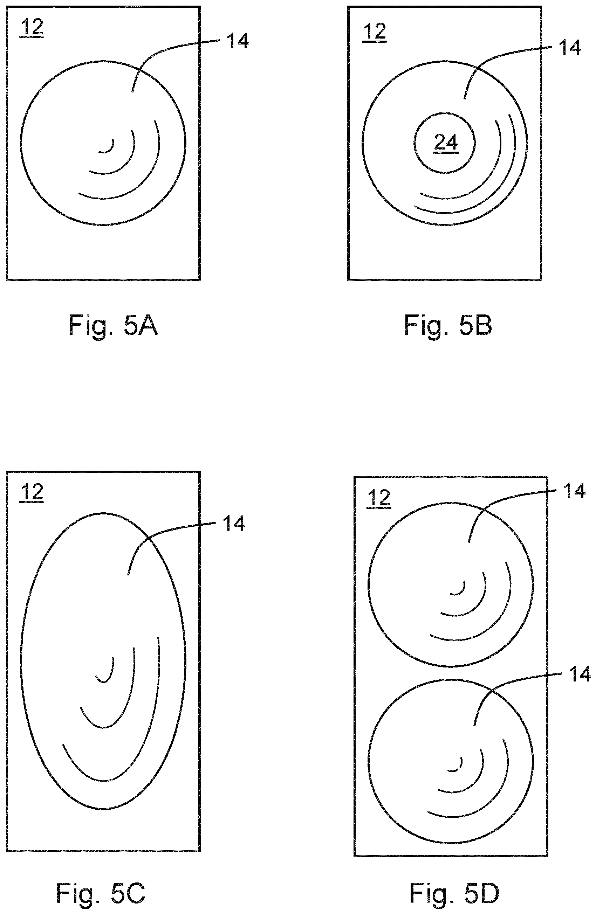

Fig. 5A bis 5D zeigen Draufsichten unterschiedlicher Varianten des elastischen Elements 10. In Fig. 5A hat das elastische Element 10 - der Fig. 3 entsprechend - rechteckigen Randabschnitt 12 und einen halbkugelförmigen vorspringenden Abschnitt 14. In Fig. 5B hat das elastische Element 10 - der Fig. 4 entsprechend - ebenfalls einen rechteckigen Randabschnitt 12 und einen halbkugelförmigen vorspringenden Abschnitt 14 mit einem abgeflachten Abschnitt 24. Wenn der Behälter 2 und somit der Deckel 4 schmäler ausgebildet ist, kann, wie in der Fig. 5C gezeigt, der vorspringende Abschnitt 14 die Form eines Ellipsoids haben, oder, wie in Fig. 5D gezeigt, zwei oder mehrere in Reihe(n) angeordnete halbkugelförmige Abschnitte 14 aufweisen.

Um sicherzustellen, dass alle Waren 16 innerhalb des Behälters durch das elastische Element 10 gesichert werden, sollte die Höhe h (siehe Fig. 2) des elastischen Elements 10 größer als der Abstand der niedrigsten Ware von der Deckelinnenseite (vgl. Fig. 1). Somit sollte folgende Bedingung (1) gelten:

$$h > H_B - H_{Wmin} \qquad\qquad (1)$$

mit:

h:        Höhe des elastischen Elements 10
$H_B$:        Abstand Boden - Deckel
$H_{Wmin}$:        Höhe der niedrigste(n) Ware(n).

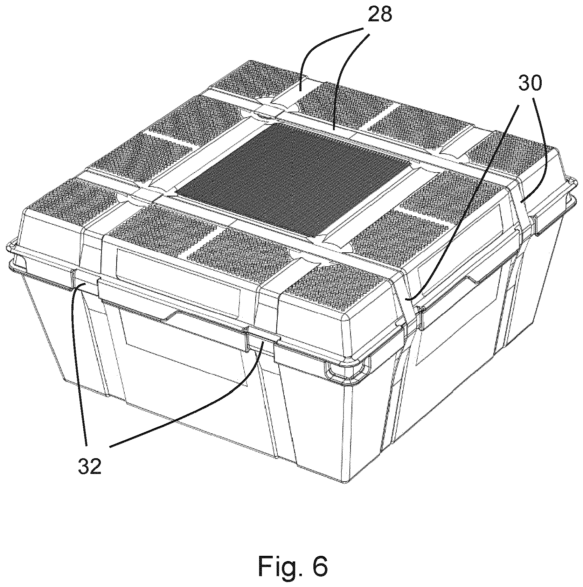

Fig. 6 zeigt eine perspektivische Ansicht des Behälters 2 samt Deckel 4. Die Oberseite des Deckels 4 und die Außenseiten des Bodens 6 und der Seitenwände 8 können mehrere jeweils miteinander fluchtende flache Nuten 28 zur Aufnahme jeweils eines umlaufenden Spanngurts 30 aufweisen. Die Spanngurte 28 stellen sicher, dass sich der Deckel 4 aufgrund der innen wirkenden elastischen Kräfte nicht von der Behälterwanne löst. Alternativ oder zusätzlich können am oberen Rand der Behälterwanne oder seitlich am Deckel 4 Verriegelungselemente oder Schnappverschlüsse 32, mittels welcher der Deckel 4 fest auf der Behälterwanne befestigt werden kann.

Bezugszeichenliste

| | |
|---|---|
| 2 | Behälter |
| 4 | Deckel |
| 6 | Boden |
| 8 | Seitenwände |
| 10 | elastisches Element |
| 12 | Randabschnitt |
| 14 | vorspringender (gekrümmter) Abschnitt |
| 16 | Ware |
| 18 | Halterung |
| 20 | Entlüftungsöffnungen |
| 22 | Übergang |
| 24 | abgeflachter Abschnitt |
| 26 | Übergang |
| 28 | Nuten |
| 30 | Spanngurt |
| 32 | Verschlusselement |

**Patentansprüche**

1. Behältersystem (2) zum Transportieren von Stückware (16) mit:

   einem Behälter (3);
   einem Deckel (4) zum Verschließen des Behälters (3); und
   zumindest einem elastischen Element (10) zur Lagefixierung der Stückware (16) innerhalb des Behälterinnenraums, **dadurch gekennzeichnet, dass**
   das zumindest eine elastische Element (10) separat ausgebildet ist und so geformt ist, dass sich mehrere elastische Elemente (10) übereinander stapeln oder ineinander nesten lassen.

2. Behältersystem (2) nach Anspruch 1, **dadurch gekennzeichnet, dass** das elastische Element (10) die Form eines Halbsphäroids aufweist, vorzugsweise halbkugelförmig ist.

3. Behältersystem (2) nach Anspruch 1 oder 2, **dadurch gekennzeichnet, dass** das zumindest eine elastische Element (10) an einer Innenseite des Deckels (4), vorzugsweise an zentraler Stelle, oder einer Innenseite des Behälters (3) werkzeuglos und lösbar so befestigbar ist, dass es in den Behälterinnenraum vorspringt.

4. Behältersystem (2) nach Anspruch 1, **dadurch gekennzeichnet, dass**
   das elastische Element (10) im unbelasteten Zustand zumindest in zwei Ebenen, vorzugsweise in zumindest zwei zueinander senkrechten Ebenen, gekrümmt ist und mit dem Deckel (2) oder dem Behälter (3) einen geschlossenen Hohlraum ausbildet.

5. Behältersystem (2) nach einem der vorhergehenden Ansprüche, **dadurch gekennzeichnet, dass** das elastische Element (10) auf der dem Deckel (4) zugewandten Seite einen umlaufenden, ebenen Kragen oder Befestigungsflansch (12) zur flächigen Anlage und Befestigung an der Innenseite des Deckels (4).

6. Behältersystem (2) nach einem der vorhergehenden Ansprüche, **dadurch gekennzeichnet, dass** Form und/oder Abmessungen des Befestigungsflansches (12) an die Innenseite des Deckels (4) angepasst sind, insbesondere der Befestigungsflansch (12) rechteckförmige Außenabmessungen hat.

7. Behältersystem (2) nach einem der vorhergehenden Ansprüche, **dadurch gekennzeichnet, dass** das elastische Element (10) im Bereich des Scheitelpunkts abgeflacht oder krümmungsfrei ist.

8. Behältersystem (2) nach einem der vorhergehenden Ansprüche, **dadurch gekennzeichnet, dass** der (22, 26) zwischen dem gekrümmten Abschnitt (14) des elastischen Elements (10) einerseits und dem Befestigungsflansch (12) und/oder dem abgeflachten Scheitelpunkt (24) andererseits sprungfrei, knickfrei und krümmungsruckfrei ist.

9.  Behältersystem (2) nach einem der vorhergehenden Ansprüche, **dadurch gekennzeichnet, dass** das elastische Element (10) aus recyclebarem Kunststoff hergestellt ist.

10. Behältersystem (2) nach einem der vorhergehenden Ansprüche, **dadurch gekennzeichnet, dass** das elastische Element (10) Entlüftungsöffnungen oder -schlitze (20) aufweist.

11. Elastisches Element (10) zur Verwendung in einem Behältersystem (2) nach einem der vorhergehenden Ansprüchen, welches an einer Innenseite des Deckels (4), vorzugsweise an zentraler Stelle, oder einer Innenseite des Behälters (3) derart platzierbar oder befestigbar ist, dass es in den Behälterinnenraum vorspringt, **dadurch gekennzeichnet, dass** das elastische Element (10) so geformt sein, dass sich mehrere elastische Elemente (10) übereinander stapeln oder ineinander nesten lassen.

12. Elastisches Element (10) nach Anspruch 11, **dadurch gekennzeichnet, dass** das elastische Element (10) die Form eines Halbsphäroids aufweist, vorzugsweise halbkugelförmig ist.

13. Elastisches Element (10) nach Anspruch 11 oder 12, **dadurch gekennzeichnet, dass** das elastische Element (10) zumindest in zwei Ebenen, vorzugsweise in zumindest zwei zueinander senkrechten Ebenen, gekrümmt ist und mit dem Deckel (4) oder dem Behälter (3) einen geschlossenen Hohlraum ausbildet, wenn es an der Innenseite des Deckels (4) oder des Behälters (3) anliegt oder befestigt ist.

Fig. 1

Fig. 2

10

12

22

14

20

Fig. 3

10

14    24    26    22

12

Fig. 4

Fig. 5A

Fig. 5B

Fig. 5C

Fig. 5D

Fig. 6

EP 3 865 417 A1

**Europäisches Patentamt**
**European Patent Office**
**Office européen des brevets**

# EUROPÄISCHER RECHERCHENBERICHT

Nummer der Anmeldung

EP 20 15 7241

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | FR 1 339 263 A (MM. VICTRICE MOUSALLI ET JACOB WYPLOSZ) 4. Oktober 1963 (1963-10-04) * Abbildungen 1-7 * ----- | 1-6,9, 11-13 | INV. B65D25/10 B65D51/26 B65D81/05 |
| X | DE 20 2016 101076 U1 (DENK STEFAN [DE]) 31. Mai 2017 (2017-05-31) * Absatz [0030]; Abbildungen 1,2 * * Absatz [0030] * ----- | 1-9, 11-13 | |
| X | US 2009/084703 A1 (ESKENAZI KEN [US] ET AL) 2. April 2009 (2009-04-02) * Absätze [0021] - [0037]; Abbildungen 1-3 * ----- | 1-4,9, 11-13 | |
| X | GB 769 054 A (BUNDER GLAS G M B H) 27. Februar 1957 (1957-02-27) * das ganze Dokument * ----- | 1-4,9-13 | |

RECHERCHIERTE SACHGEBIETE (IPC)

B65D

Der vorliegende Recherchenbericht wurde für alle Patentansprüche erstellt

| Recherchenort | Abschlußdatum der Recherche | Prüfer |
|---|---|---|
| München | 13. Juli 2020 | Jervelund, Niels |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

.......................................................
& : Mitglied der gleichen Patentfamilie, übereinstimmendes
    Dokument

EPO FORM 1503 03.82 (P04C03)

13

**ANHANG ZUM EUROPÄISCHEN RECHERCHENBERICHT
ÜBER DIE EUROPÄISCHE PATENTANMELDUNG NR.**

EP 20 15 7241

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-07-2020

| Im Recherchenbericht angeführtes Patentdokument | Datum der Veröffentlichung | Mitglied(er) der Patentfamilie | Datum der Veröffentlichung |
|---|---|---|---|
| FR 1339263 A | 04-10-1963 | KEINE | |
| DE 202016101076 U1 | 31-05-2017 | KEINE | |
| US 2009084703 A1 | 02-04-2009 | KEINE | |
| GB 769054 A | 27-02-1957 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 94024091 A2
- DE 29801569 U1
- CH 670072 A5
- EP 0727367 B1